# EUROPEAN PATENT APPLICATION

(11) **EP 4 425 079 A1**
(43) Date of publication of application: **04.09.2024**
(21) Application number: 22899979.3
(22) Date of filing: 23.08.2022
(51) Int. Cl.: F27B 9/30, F27B 9/40, H01M 4/139, H01M 10/0525

(54) **LITHIUM BATTERY POSITIVE ELECTRODE MATERIAL AND PRODUCTION PROCESS THEREOF**

(30) Priority: 30.11.2021 CN 202111439757
(71) Applicant: Guangdong Brunp Recycling Technology Co., Ltd, Foshan, Guangdong 528137 (CN); Hunan Brunp Recycling Technology Co., Ltd., Changsha, Hunan 410600 (CN); Hunan Brunp EV Recycling Co., Ltd., Changsha, Hunan 410600 (CN)
(72) Inventor: WANG, Qian, Foshan, Guangdong 528137 (CN); LI, Changdong, Foshan, Guangdong 528137 (CN); RUAN, Dingshan, Foshan, Guangdong 528137 (CN); LIU, Weijian, Foshan, Guangdong 528137 (CN); LIU, Jingjing, Foshan, Guangdong 528137 (CN); CAI, Yong, Foshan, Guangdong 528137 (CN)
(74) Representative: Studio Torta S.p.A.
(86) International application number: PCT/CN2022/114288
(87) International publication number: WO 2023/098160

(57) **Abstract**

Disclosed in the present invention is a production process of a lithium battery positive electrode material, comprising the following steps: (1) temperature difference test: putting, into a sagger, a material to be sintered, placing the sagger into a roller kiln heat preservation area, setting a same sintering temperature t on the upper layer and the lower layer of the roller kiln heat preservation area according to the characteristics of said material, sintering in a specific atmosphere, and measuring a temperature difference Δt between material surface layer and bottom layer during sintering; and (2) formal sintering: putting said material into the sagger, placing the sagger into the roller kiln heat preservation area, setting the sintering temperature of the upper layer of the roller kiln heat preservation area as t according to the temperature difference Δt measured in step (1), the sintering temperature of the lower layer being (t+Δt), and sintering said material in a specific atmosphere. The production process can effectively improve the consistency of the prepared lithium battery positive electrode material.

## Description

### TECHNICAL FIELD

The present disclosure belongs to the technical field of production of cathode material of a lithium-ion battery, and in particular, relates to cathode material of a lithium battery and a production process thereof.

### BACKGROUND

In September 2020, China officially set up a green development strategy of "striving to achieve peak of carbon dioxide emissions before 2030 and carbon neutrality before 2060". Replacing traditional fossil energy with green new energy and reducing carbon dioxide emissions are crucial to achieve "carbon neutrality". Conventional clean energy includes lithium-ion batteries, hydrogen energy, wind energy, solar energy, nuclear energy, etc. Lithium-ion batteries have been highly commercialized and will contribute a lot to the achievement of the goals of "carbon peaking" and "carbon neutrality".

Continuous improvement of energy density and power density of lithium-ion batteries is the driving force for the continuous iteration of the lithium battery industry, and the overall performance of a lithium battery system is closely related to the performance of a cathode material. The sintering process directly determines the performance indicators of the cathode material, such as electrochemical properties, physical and chemical properties, so it has attracted much attention. Sintering of a cathode material involves putting a precursor, a lithium source and an additive into a saggar, placing the saggar then in a specific atmosphere, and performing complicated multi-step chemical reactions at a high temperature to produce a cathode material. During the reaction, controlling processing parameters is very important for product consistency, especially a sintering temperature, which directly determines key indicators of a product such as phase composition, crystal size, and crystallinity. During the sintering, an upper layer and a lower layer of heat preservation zone of a roller kiln are typically set to the same sintering temperature. However, in actual operation, since a material to be sintered has been placed inside the saggar, its surface layer and bottom layer are actually heated differently. In fact, during an actual sintering, its surface layer is heated at a higher temperature, resulting in faults between the upper layer and the lower layer of the produced cathode material of a lithium battery, and poor product consistency.

### SUMMARY

The present disclosure is directed to solve at least one of the technical problems existing in prior art. For this purpose, the present disclosure provides cathode material of a lithium battery and a production process thereof, which can effectively improve the consistency of the produced cathode material of the lithium battery.

The above-mentioned technical objectives of the present disclosure is achieved through the following technical solutions.

A process for producing cathode material of a lithium battery comprises steps of: (1) measuring temperature difference, which comprises loading a material to be sintered into a saggar, placing it in a heat preservation zone of a roller kiln, setting a same sintering temperature t for an upper layer and a lower layer of the heat preservation zone of the roller kiln based on characteristics of the material to be sintered, carrying out sintering under a specific atmosphere, and measuring temperature difference Δt between a surface layer and a bottom layer of the material during the sintering; and (2) second sintering, which comprises loading the material to be sintered into a saggar, placing it in the heat preservation zone of the roller kiln, setting the sintering temperature of the upper layer of the heat preservation zone of the roller kiln to *t* and the sintering temperature of the lower layer to (*t*+Δ*t*) based on the temperature difference Δ*t* measured in step (1), and sintering the material to be sintered under the specific atmosphere.

Preferably, in step (1), measuring temperature difference *Δt* between the surface layer and the bottom layer of the material involves: respectively embedding a temperature-measuring component in the surface layer and the bottom layer of the material to be sintered before the sintering, taking out the temperature-measuring component from pieces of material produced by the sintering after the sintering, and measuring deformation of the temperature-measuring component from initial state thereof to calculate the temperature difference *Δt.*

Preferably, the temperature-measuring component is previously placed inside a temperature-measuring box, and the temperature-measuring box is respectively embedded in the surface layer and the bottom layer of the material to be sintered.

Preferably, the temperature-measuring box is made from the pieces of material produced by sintering the material to be sintered.

Preferably, the temperature-measuring component is placed inside the temperature-measuring box, leaving a gap from inner walls of the box, wherein the gap has a width of 8%-15% of respective lengths of two mutually perpendicular straight lines passing through the center of the temperature-measuring component.

Further preferably, the temperature-measuring component is placed inside the temperature-measuring box, leaving a gap from inner walls of the box, wherein the gap has a width of 10% of respective lengths of two mutually perpendicular straight lines passing through the center of the temperature-measuring component.

Preferably, in step (2), the sintering temperature of the upper layer of the heat preservation zone of the roller kiln is set to *t,* and the sintering temperature of the lower layer of the heat preservation zone of the roller kiln is set to (*t*+*Δt*+2°C).

Preferably, the temperature-measuring component is a temperature-measuring block or a temperature-measuring ring.

Preferably, the material to be sintered is one of ternary NCM and LiCoO₂.

Preferably, the specific atmosphere is an oxygen-containing atmosphere.

Provided is a cathode material of a lithium battery produced by using the above-mentioned production process.

The present disclosure has the following beneficial effects.
(1) According to the present disclosure, by firstly measuring the temperature difference *Δt* between a surface layer and a bottom layer of the material during the sintering, and then individually setting temperature for an upper layer and a lower layer of the heat preservation zone of the roller kiln, so that the surface layer and the bottom layer of the material in the saggar are actually heated equally or highly similarly during the sintering, thereby more evenly heating the overall material, avoiding occurrence of faults between the upper layer and the lower layer during the sintering, and ensuring better consistency of the final product.
(2) According to the present disclosure, it is preferable to take advantage of the high thermal conductivity and machinability of sintered cathode material of a lithium battery, cut a piece of material after high-temperature sintering into a temperature-measuring box, put the temperature-measuring block (or ring) in the temperature-measuring box, and embed it into the surface layer and the bottom layer of the material to be sintered respectively for sintering. Because the temperature-measuring block (or ring) does not directly contact with the material and there is a gap left between the temperature-measuring block (or ring) and the inner walls of the temperature-measuring box, it will not affected by a stress generated during the sintering of cathode material, enabling the temperature of the surface layer and the bottom layer of the material during the sintering to be identified by measuring the deformation of the temperature-measuring block (or ring) from its initial state, so as to make a targeted adjustment of kiln parameters, improve the uniformity of the finished product and enhance its consistency.
(3) According to the present disclosure, considering the gap and heat conduction between the temperature-measuring block and inner walls of the temperature-measuring box, the temperature difference between the upper layer and the lower layer of the roller kiln is preferably set to (*Δt*+2°C).

### BRIEF DESCRIPTION OF DRAWINGS

FIG. 1 is an SEM image of a material at the surface layer and the bottom layer in Example 1;
FIG. 2 is an SEM image of a material at the surface layer and the bottom layer in Comparative Example 1;
FIG. 3 is a schematic drawing illustrating a temperature-measuring block placed inside a temperature-measuring box in Example 1; and
FIG. 4 is a schematic drawing illustrating a temperature-measuring ring placed inside a temperature-measuring box in Example 2.

Reference numbers in the accompanying drawings:
101 temperature-measuring box, 102 cover of temperature-measuring box, 103 gap, 104 temperature-measuring block, and 105 temperature-measuring ring.

### DETAILED DESCRIPTION OF EMBODIMENTS

The present disclosure will be further described below with reference to specific examples.

### Example 1

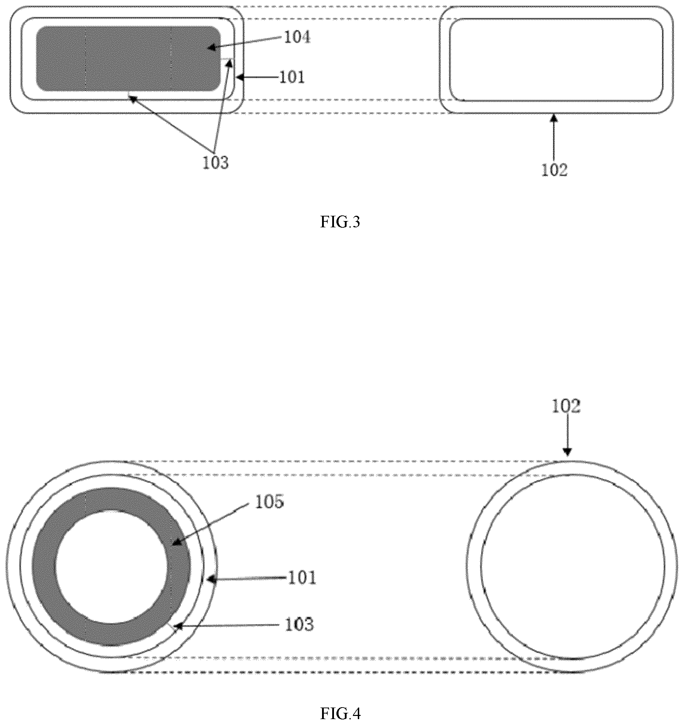

A process for producing a cathode material of LiNi_{0.5476}Co_{0.1195}Mn_{0.3286}Zr_{0.0043}O₂ comprised the following steps:
(1) Measurement of temperature difference: 10000 parts by weight of Ni_{0.55}Co_{0.12}Mn_{0.33}(OH)₂ precursor, 4250 parts by weight of lithium carbonate and 36 parts by weight of ZrO₂ were well mixed and put into a saggar. At the same time, during saggar-loading, two temperature-measuring boxes 101 containing a temperature-measuring block 104, as shown in FIG. 3, were separately embedded in a bottom layer and a surface layer of a material. After the temperature-measuring block 104 was put into the temperature-measuring box 101, the box was covered with a cover of the temperature-measuring box 102. 1 row of saggar was fed, and 8 rows of empty saggars were respectively arranged before and after the feeding saggar to keep the temperature even, so as to ensure a temperature of the material to be substantially the same as the temperature of the material while continuously feeding raw materials into the kiln. Then, high-temperature sintering was carried out in an oxygen-containing atmosphere. The temperature-measuring box 101 was made by cutting pieces of sintered cathode material LiNi_{0.5476}Co_{0.1195}Mn_{0.3286}Zr_{0.0043}O₂. The temperature-measuring block 104 was put into the temperature-measuring box 101, leaving gaps 103 from inner walls of the box. The width of the gaps 103 was 10% respective lengths of two mutually perpendicular straight lines passing through the center of the temperature-measuring block 104. During the sintering, the temperature of the an upper layer and a lower layer of the heat preservation zone of the roller kiln was both set to 935°C. The holding time of the high-temperature section was 11 h, and the total sintering period was 28 h. After discharging, the pieces of material were broken apart, to take out the temperature-measuring box 101 and then the temperature-measuring block 104. According to the shrinkage of the temperature-measuring block 104, the temperature difference between the surface layer and the bottom layer of the material was quantitatively determined as *Δt*=4°C.
(2) Second sintering: 10000 parts by weight of Ni_{0.55}Co_{0.12}Mn_{0.33}(OH)₂ precursor, 4250 parts by weight of lithium carbonate and 36 parts by weight of ZrO₂ were well mixed, put into a saggar, and sintered at a high temperature in a roller kiln under an oxygen-containing atmosphere. During the sintering, the temperature of the upper layer of the heat preservation zone of the roller kiln was set to 935°C, and the temperature of the lower layer was set to 941°C (considering the gap and heat conduction between the temperature-measuring block and the inner walls of the temperature-measuring box, the temperature difference between the upper layer and the lower layer of the roller kiln was set to *Δt*+2°C). The holding time of the high-temperature section was 11 h, and the total sintering period was 28 h.

The pieces of material of the surface layer and the bottom layer inside the saggar after second sintering were taken for analysis of microstructure, and respectively prepared into finished products for half-cell test. The test method was to charge cells to 4.35 V first, and then discharge at a rate of 0.1 C with a cut-off voltage of 2.8 V.

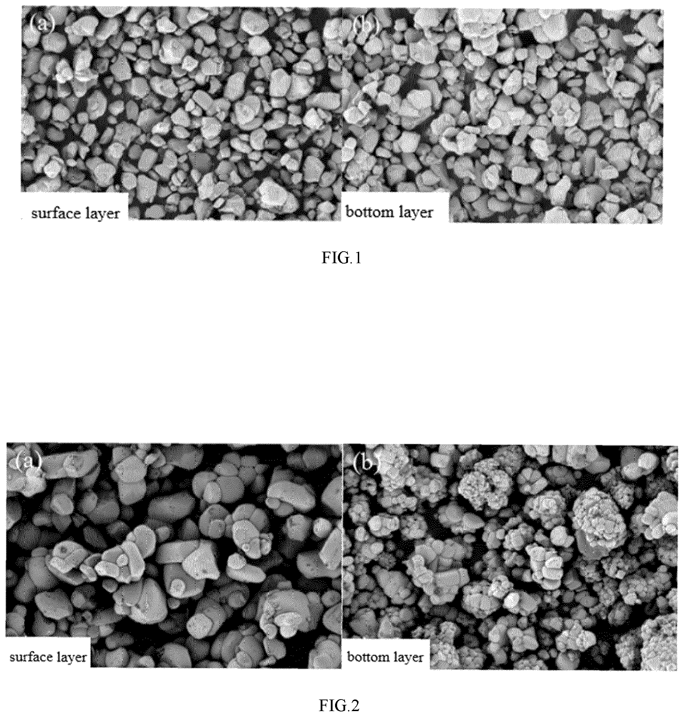

Test results: SEM results of the pieces of material of the surface layer and the bottom layer are shown in FIG. 1. It can be seen from FIG. 1 that the produced primary particles of materials at the surface layer and the bottom layer are equivalent and show no significant difference. Simultaneously, the half-cell prepared from the material at the upper layer had a capacity per gram of 178 mAh, and the one prepared from the material at the lower layer had a capacity per gram of 179 mAh, which were almost at the same level, indicating high consistency of products.

### Example 2

A process for producing a cathode material of LiNi_{0.6438}Co_{0.06933}Mn_{0.2773}Zr_{0.0037}Al_{0.0058}O₂ comprised the following steps.
(1) Measurement of temperature difference: 10000 parts by weight of Ni_{0.65}Co_{0.08}Mn_{0.27}(OH)₂ precursor, 4640 parts by weight of lithium hydroxide, 29 parts by weight of ZrO₂, and 19 parts by weight of Al₂O₃ were well mixed and put into a saggar. During saggar-loading, two temperature-measuring boxes 101 containing a temperature-measuring ring 105, as shown in FIG. 4, were separately embedded in a bottom layer and a surface layer of a material. After the temperature-measuring ring 105 was put into the temperature-measuring box 101, the box was covered with a cover of the temperature-measuring box 102. 1 row of saggar was fed, and 8 rows of empty saggars were respectively arranged before and after the feeding saggar to keep the temperature even, so as to ensure a temperature of the material to be substantially the same as the temperature of the material while continuously feeding raw materials into the kiln, Then, high-temperature sintering was carried out in an oxygen-containing atmosphere. The temperature-measuring box 101 was made by cutting pieces of sintered cathode material LiNi_{0.6438}Co_{0.06933}Mn_{0.2773}Zr_{0.0037}Al_{0.0058}O₂. The temperature-measuring ring 105 was put into the temperature-measuring box 101, leaving gaps from inner walls of the box. The width of the gaps was 10% of respective lengths of two mutually perpendicular straight lines passing through the center of the temperature-measuring ring 105. During the sintering, the temperature of an upper layer and a lower layer of the heat preservation zone of the roller kiln was both set to 928°C. The holding time of the high-temperature section was 12 h, and the total sintering period was 30 h. After discharging, the pieces of material were broken apart, to take out the temperature-measuring box 101 and then the temperature-measuring ring 105. According to the shrinkage of the temperature-measuring ring 105, the temperature difference between the surface layer and the bottom layer of the material was quantitatively determined as *Δt*=4°C.
(2) Second sintering: 10000 parts by weight of Ni_{0.65}Co_{0.07}Mn_{0.28}(OH)₂ precursor, 4640 parts by weight of lithium hydroxide, 29 parts by weight of ZrO₂, and 19 parts by weight of Al₂O₃ were well mixed and put into a saggar and sintered at a high temperature in a roller kiln under an oxygen-containing atmosphere. During the sintering, the temperature of the upper layer of the heat preservation zone of the roller kiln was set to 928°C, and the temperature of the lower layer was set to 934°C (considering the gap and heat conduction between the temperature-measuring ring and the inner walls of the temperature-measuring box, the temperature difference between the upper layer and the lower layer of the roller kiln was set to *Δt*+2°C). The holding time of the high-temperature section was 12 h, and the total sintering period was 30 h.

The pieces of material of the surface layer and the bottom layer inside the saggar after second sintering were taken for analysis of microstructure, and respectively prepared into finished products for half-cell test. The test method was to charge cells to 4.35 V first, and then discharge at a rate of 0.1 C with a cut-off voltage of 2.8 V.

Test results: SEM results of the pieces of material of the surface layer and the bottom layer show that the produced primary particles of materials at the surface layer and the bottom layer are equivalent and show no significant difference. Simultaneously, the half-cell prepared from the material at the upper layer had a capacity per gram of 189 mAh, and the one prepared from the material at the lower layer had a capacity per gram of 189.5 mAh, which were almost at the same level, indicating high consistency of the products.

### Example 3

A process for producing a cathode material of LiNi_{0.6904}Co_{0.0493}Mn_{0.2466}Zr_{0.0042}Al_{0.0054}B_{0.0042}O₂ comprised the following steps:
(1) Measurement of temperature difference: 10000 parts by weight of Ni_{0.70}Co_{0.05}Mn_{0.25}(OH)₂ precursor, 4780 parts by weight of lithium hydroxide, 36 parts by weight of ZrO₂, 19 parts by weight of Al₂O₃, and 10 parts by weight of B₂O₃ were well mixed and put into a saggar. During saggar-loading, two temperature-measuring boxes containing temperature-measuring block were separately embedded in a bottom layer and a surface layer of a material. After the temperature-measuring block was placed into the temperature-measuring box, the box was covered with a cover of the temperature-measuring box. 1 row of saggar was fed, and 8 rows of empty saggars were respectively arranged before and after the feeding saggar to keep the temperature even, so as to ensure a temperature of the material to be substantially the same as the temperature of the material while continuously feeding raw materials into the kiln. Then, high-temperature sintering was carried out in an oxygen-containing atmosphere. The temperature-measuring box was made by cutting pieces of sintered LiNi_{0.6904}Co_{0.0493}Mn_{0.2466}Zr_{0.0042}Al_{0.0054}B_{0.0042}O₂ cathode material. The temperature-measuring block was placed into a temperature-measuring box, leaving gaps from inner walls of the box. The width of the gaps was 10% of the respective lengths of two mutually perpendicular straight lines passing through the center of the temperature-measuring block. During the sintering, the temperature of an upper layer and a lower layer of the heat preservation zone of the roller kiln was both set to 923°C. The holding time of the high-temperature section was 10.5 h, and the total sintering period was 26 h. After discharging, the pieces of material were broken apart, to take out the temperature-measuring box and then the temperature-measuring block. According to the shrinkage of the temperature-measuring block, the temperature difference between the surface layer and the bottom layer of the material was quantitatively determined as *Δt*=5°C.
(2) Second sintering: 10000 parts by weight of Ni_{0.70}Co_{0.05}Mn_{0.25}(OH)₂ precursor, 4780 parts by weight of lithium hydroxide, 36 parts by weight of ZrO₂, 19 parts by weight of Al₂O₃, and 10 parts by weight of B₂O₃ were well mixed and put into a saggar and sintered at a high temperature in a roller kiln under an oxygen-containing atmosphere. During the sintering, the temperature of the upper layer of the heat preservation zone of the roller kiln was set to 923°C, and the temperature of the lower layer was set to 930°C (considering the gap and heat conduction between the temperature-measuring block and the inner walls of the temperature-measuring box, the temperature difference between the upper layer and the lower layer of the roller kiln was set to *Δt*+2°C). The holding time of the high-temperature section was 10.5 h, and the total sintering period was 26 h.

The pieces of material of the surface layer and the bottom layer inside the saggar after second sintering were taken for analysis of microstructure, and respectively prepared into finished products for half-cell test. The test method was to charge cells to 4.35 V first, and then discharge at a rate of 0.1 C with a cut-off voltage of 2.8 V.

Test results: SEM results of the pieces of material of the surface layer and the bottom layer show that the produced primary particles of materials at the surface layer and the bottom layer are equivalent and show no significant difference. Simultaneously, the half-cell prepared from the material at the upper layer had a capacity per gram of 193 mAh, and the one prepared from the material at the lower layer had a capacity per gram of 192 mAh, which were almost at the same level, indicating high consistency of the products.

### Example 4

A process for producing a cathode material of LiCo_{0.9859}Al_{0.0093}Mg_{0.0047}O₂ comprised the following steps.
(1) Measurement of temperature difference: 10000 parts by weight of Co₃O₄ precursor, 4800 parts by weight of lithium carbonate, 60 parts by weight of Al₂O₃, and 24 parts by weight of MgO were well mixed and put into a saggar. During saggar-loading, two temperature-measuring boxes containing a temperature-measuring block were separately embedded in a bottom layer and a surface layer of a material. After the temperature-measuring block was placed into the temperature-measuring box, the box was covered with a cover of the temperature-measuring box. 1 row of saggar was fed, and 8 rows of empty saggars were respectively arranged before and after the feeding saggar to keep the temperature even, so as to ensure a temperature of the material to be substantially the same as the temperature of the material while continuously feeding raw materials into the kiln. Then, high-temperature sintering was carried out in an oxygen-containing atmosphere. The temperature-measuring box was made by cutting pieces of sintered LiCo_{0.9859}Al_{0.0093}Mg_{0.0047}O₂ cathode material. The temperature-measuring block was placed into a temperature-measuring box, leaving gaps from inner walls of the box. The width of the gaps was 10% of the respective lengths of two mutually perpendicular straight lines passing through the center of the temperature-measuring block. During the sintering, the temperature of an upper layer and a lower layer of the heat preservation zone of the roller kiln was both set to 1020°C. The holding time of the high-temperature section was 14 h, and the total sintering period was 32 h. After discharging, the pieces of material were broken apart, to take out the temperature-measuring box, and then temperature-measuring block. According to the shrinkage of the temperature-measuring block, the temperature difference between the surface layer and the bottom layer of the material was quantitatively determined as *Δt*=7°C;
(2) Second sintering: 10000 parts by weight of Co₃O₄ precursor, 4800 parts by weight of lithium carbonate, 60 parts by weight of Al₂O₃, and 24 parts by weight of MgO were well mixed and put into a saggar and sintered at a high temperature in a roller kiln under an oxygen-containing atmosphere. During the sintering, the temperature of the upper layer of the heat preservation zone of the roller kiln was set to 1020°C, and the temperature of the lower layer was set to 1029°C (considering the gap and heat conduction between the temperature-measuring block and the inner walls of the temperature-measuring box, the temperature difference between the upper layer and the lower layer of the roller kiln was set to *Δt*+2°C). The holding time of the high-temperature section was 14 h, and the total sintering period was 32 h.

The pieces of material of the surface layer and the bottom layer inside the saggar after second sintering were taken for analysis of microstructure, and respectively prepared into finished products for half-cell test. The test method was to charge cells to 4.35 V first, and then discharge at a rate of 0.1 C with a cut-off voltage of 2.8 V.

Test results: SEM results of the pieces of material of the surface layer and the bottom layer show that the produced primary particles of materials at the surface layer and the bottom layer are equivalent and show no significant difference. Simultaneously, the half-cell prepared from the material at the upper layer had a capacity per gram of 191 mAh, and the one prepared from the material at the lower layer had a capacity per gram of 192 mAh, which was almost at the same level, indicating high consistency of the products.

### Comparative Example 1

A process for producing LiNi_{0.5476}Co_{0.1195}Mn_{0.3286}Zr_{0.0043}O₂ cathode material comprised the following steps:

10000 parts by weight of Ni_{0.55}Co_{0.12}Mn_{0.33}(OH)₂ precursor, 4250 parts by weight of lithium carbonate and 36 parts by weight of ZrO₂ were well mixed and put into a saggar and sintered at a high temperature in a roller kiln under an oxygen-containing atmosphere. During the sintering, the temperature of an upper layer and a lower layer of the heat preservation zone of the roller kiln was both set to 935°C.

The pieces of material of the surface layer and the bottom layer inside the saggar after sintering were taken for analysis of microstructure, and respectively prepared into finished products for half-cell test. The test method was to charge cells to 4.35 V first, and then discharge at a rate of 0.1 C with a cut-off voltage of 2.8 V.

Test results: SEM results of the pieces of material of the surface layer and the bottom layer are shown in FIG. 2. It can be seen from FIG. 2 that the primary particles of the material at the surface layer are distinctly larger, while the material at the bottom layer distinctly have ungrown-up particles. Simultaneously, the half-cell prepared from the material at the upper layer had a capacity per gram of 177 mAh, and the one prepared from the material at the lower layer had a capacity per gram of 182 mAh, indicating that there are faults in properties of the materials at the upper layer and lower layer, and poor consistency of the products.

The above-mentioned examples are the preferred embodiments of the present disclosure, but they do not limit the embodiments of the present invention, and any other changes, modifications, substitutions, combinations and simplification made without departing from the spirit or principle of the present invention should be deemed as equivalent substitutions, and included in the protection scope of the present invention.

## Claims

1. A process for producing cathode material of a lithium battery, comprising steps of:
(1) measuring temperature difference, which comprises loading a material to be sintered into a saggar, placing it in a heat preservation zone of a roller kiln, setting a same sintering temperature t for an upper layer and a lower layer of the heat preservation zone of the roller kiln based on characteristics of the material to be sintered, carrying out sintering under a specific atmosphere, and measuring temperature difference Δt between a surface layer and a bottom layer of the material during the sintering; and
(2) second sintering, which comprises loading the material to be sintered into a saggar, placing it in the heat preservation zone of the roller kiln, setting the sintering temperature of the upper layer of the heat preservation zone of the roller kiln to *t* and the sintering temperature of the lower layer to (*t*+Δ*t*) based on the temperature difference Δ*t* measured in step (1), and sintering the material to be sintered under the specific atmosphere.

2. The process for producing the cathode material of the lithium battery according to claim 1, wherein in step (1), measuring temperature difference *Δt* between the surface layer and the bottom layer of the material involves: respectively embedding a temperature-measuring component in the surface layer and the bottom layer of the material to be sintered before the sintering, taking out the temperature-measuring component from pieces of material produced by the sintering after the sintering, and measuring deformation of the temperature-measuring component from initial state thereof to calculate the temperature difference *Δt.*

3. The process for producing the cathode material of the lithium battery according to claim 2, wherein the temperature-measuring component is previously placed inside a temperature-measuring box, and the temperature-measuring box is respectively embedded in the surface layer and the bottom layer of the material to be sintered.

4. The process for producing the cathode material of the lithium battery according to claim 3, wherein the temperature-measuring box is made from the pieces of material produced by sintering the material to be sintered.

5. The process for producing the cathode material of the lithium battery according to claim 4, wherein the temperature-measuring component is placed inside the temperature-measuring box, leaving a gap from inner walls of the box,
wherein the gap has a width of 8%-15% of respective lengths of two mutually perpendicular straight lines passing through the center of the temperature-measuring component.

6. The process for producing the cathode material of the lithium battery according to claim 5, wherein in step (2), the sintering temperature of the upper layer of the heat preservation zone of the roller kiln is set to *t,* and the sintering temperature of the lower layer of the heat preservation zone of the roller kiln is set to (*t*+*Δt*+2°C).

7. The process for producing the cathode material of the lithium battery according to claim 2, wherein the temperature-measuring component is a temperature-measuring block or a temperature-measuring ring.

8. The process for producing the cathode material of the lithium battery according to claim 1, wherein the material to be sintered is one of ternary NCM and LiCoO₂.

9. The process for producing the cathode material of the lithium battery according to claim 1, wherein the specific atmosphere is an oxygen-containing atmosphere.

10. Cathode material of a lithium battery, produced by using the production process according to any one of claims 1-9.
